(19) Europäisches Patentamt
European Patent Office
Office européen des brevets

(11) **EP 1 840 467 B1**

(12) **FASCICULE DE BREVET EUROPEEN**

(45) Date de publication et mention
de la délivrance du brevet:
**06.05.2015 Bulletin 2015/19**

(51) Int Cl.:
***F23R 3/14*** *(2006.01)*     ***F23R 3/60*** *(2006.01)*
***F23R 3/28*** *(2006.01)*

(21) Numéro de dépôt: **07075225.8**

(22) Date de dépôt: **23.03.2007**

(54) **Dispositif d'injection d'un mélange d'air et de carburant, chambre de combustion et turbomachine munies d'un tel dispositif**

Vorrichtung zum Einspritzen einer Mischung aus Luft und Treibstoff, Brennkammer und Turbomaschine, die mit einer solchen Vorrichtung ausgestattet ist

Device for injecting a mix of air and fuel, combustion chamber and turbomachine equipped with such a device

(84) Etats contractants désignés:
**DE ES FR GB IT**

(30) Priorité: **30.03.2006 FR 0602750**

(43) Date de publication de la demande:
**03.10.2007 Bulletin 2007/40**

(73) Titulaire: **SNECMA**
**75015 Paris (FR)**

(72) Inventeurs:
• **Cayre, Alain**
**77830 Pamfou (FR)**

• **Desaulty, Michel**
**77240 Vert-Saint-Denis (FR)**
• **Pommier, Nicolas**
**91800 Brunoy (FR)**

(74) Mandataire: **Gevers France**
**41, avenue de Friedland**
**75008 Paris (FR)**

(56) Documents cités:
**EP-A2- 1 152 191    EP-A2- 1 158 246**
**FR-A1- 2 753 779**

EP 1 840 467 B1

**Description**

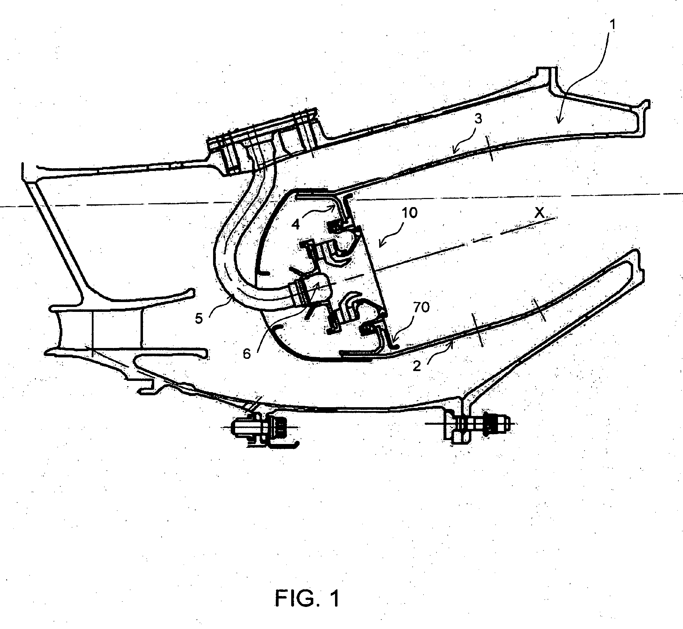

L'invention se rapporte au domaine des turbomachines et concerne un dispositif d'injection d'un mélange d'air et de carburant dans une chambre de combustion d'une turbomachine .
Elle concerne plus précisément un nouveau type de traversée coulissante pour lequel l'alimentation en air pour le mélange air/carburant est améliorée.
Dans la suite de la description, les termes "amont" et "aval" seront utilisés pour désigner les positions des éléments de structure les uns par rapport aux autres en direction axiale, en prenant pour référence le sens d'écoulement des gaz. De même, les termes "interne" ou "radialement interne" et "externe" ou "radialement externe" seront utilisés pour désigner les positions des éléments de structure les uns par rapport aux autres en direction radiale, en prenant pour référence l'axe de rotation de la turbomachine.
Une turbomachine comprend un ou plusieurs compresseur(s) délivrant de l'air sous pression à une chambre de combustion où l'air est mélangé à du carburant et allumé afin de générer des gaz de combustion chauds. Ces gaz s'écoulent vers l'aval de la chambre vers une ou plusieurs turbine(s) qui transforme(nt) l'énergie ainsi reçue afin d'entraîner en rotation le ou les compresseur(s) et fournir le travail nécessaire, par exemple, à la motorisation d'un avion. Typiquement, comme illustré à la figure 1, les chambres de combustion 1 utilisées en aéronautique comprennent une paroi interne 2 et une paroi externe 3, reliées entre elles à leur extrémité amont par un fond de chambre 4. Le fond de chambre 4 présente, espacées circonférentiellement, une pluralité d'ouvertures recevant chacune un dispositif d'injection 10 qui permet l'amenée du mélange d'air et de carburant dans la chambre.

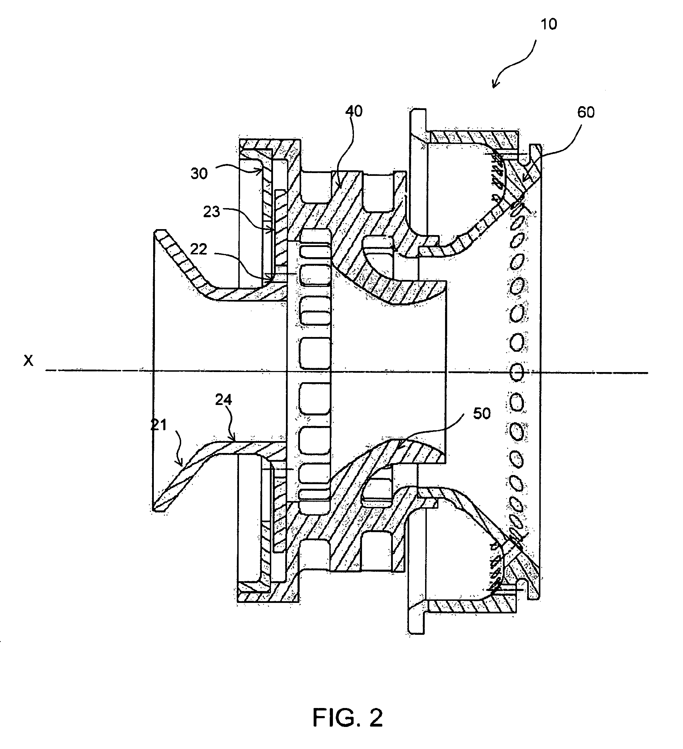

La figure 2 montre une vue en coupe d'un dispositif d'injection 10 selon l'art antérieur. Un tel dispositif est connu par exemple du document EP 1 152 191. Le dispositif d'injection 10, dont l'axe de symétrie de révolution est repéré X, comporte, disposés de l'amont vers l'aval, une traversée coulissante 20, liée par une coupelle annulaire 30 à des vrilles radiales 40. Les vrilles radiales 40 comportent un venturi 50 et sont reliées par leur extrémité aval à un bol 60 à paroi conique divergente. Le bol 60 est lui-même relié au fond de chambre 4 par l'intermédiaire d'un déflecteur 70. La traversée coulissante 20 comporte, disposés de l'amont vers l'aval, une paroi amont 21, de forme conique convergente, se prolongeant en une paroi cylindrique 24 qui se termine en aval par un flasque 23.
La chambre 1 de combustion est alimentée par du carburant liquide, mélangé à de l'air issu d'un compresseur. Le carburant liquide est amené jusqu'à la chambre par des injecteurs 5. L'extrémité aval 6, encore appelée tête, des injecteurs 5 est positionnée dans le dispositif d'injection 10, dans la traversée coulissante 20, de façon à ce que l'axe de symétrie de la tête 6 d'injecteur corresponde à l'axe de symétrie de la traversée coulissante. Ainsi, une des fonctions de la traversée coulissante 20 est de guider l'injecteur en position et d'assurer l'étanchéité entre celui-ci et le dispositif d'injection 10. La fonction de guidage de l'injecteur est assurée par la paroi amont 21 de la traversée coulissante 20. Le mélange entre l'air et le carburant est réalisé au niveau du dispositif d'injection 10, en plusieurs endroits. Un premier mélange est effectué au niveau de la traversée coulissante 20. Pour ce faire, l'air sous pression est amené via des perçages 22, appelés trous de purge, au contact du carburant sortant de l'injecteur 5. Ainsi, un spray de carburant est initié, sa formation se poursuivant en suite au niveau des vrilles radiales 40 et du bol 60. La traversée coulissante 20 a donc pour autre fonction d'assurer un premier mélange entre l'air sous pression et le carburant. L'air qui arrive aux trous de purge 22 permet de contrôler la bonne formation du spray de carburant mais aussi de refroidir la tête 6 d'injecteur. Les trous de purge 22 sont réalisés sur le flasque 23, de la traversée coulissante 20.
Une troisième fonction de la traversée coulissante 20 est d'autoriser un déplacement relatif entre l'injecteur 5 et la chambre de combustion 1, tout en conservant l'étanchéité entre l'injecteur 5 et le dispositif d'injection 10. Ce déplacement est lié aux tolérances de fabrication et aux dilatations différentielles existant entre l'injecteur et la chambre. Dans ce but, la liaison entre la traversée coulissante 20 et les vrilles radiales 40 est assurée par une coupelle 30 qui autorise un débattement de plusieurs millimètres de la traversée coulissante dans toutes les directions du plan contenant le flasque 23.
La quantité d'air qui traverse les trous de purge 22 dépend notamment de leur nombre et de leur diamètre. Le dimensionnement des trous de purge 22 a une influence à la fois sur le débit d'air total passant par ces trous et sur le blocage aérodynamique de la traversée coulissante 20. On appelle blocage aérodynamique la valeur du rapport suivant :

$$blocage\_aérodynamique = \frac{nombre\_de\_trous\_22 \times diamètre\_des\_trous\_22}{périmètre\_du\_cercle\_passant\_par\_le\_centre\_des\_trous\_22}$$

Pour un même débit, il est possible d'obtenir différentes valeurs de blocage aérodynamique, et ainsi d'influer sur la formation du spray de carburant. En effet, ce paramètre influe sur la pénétration du débit de purge et sur le niveau d'interaction entre les flux d'air issus de la purge et des vrilles. Il pilote en partie la taille des gouttes et leur répartition dans le spray ainsi que l'angle initial du cône de carburant à la sortie de l'injecteur. Le blocage aérodynamique étant proportionnel au diamètre des trous de purges 22 et le débit d'air étant proportionnel à leur diamètre au carré, il est possible de faire évoluer ces deux paramètres de façon différente, en fonction des spécificités de la chambre de combustion considérée.

Si l'on souhaite augmenter la valeur du débit d'air qui passe par les trous de purge 22, il est nécessaire d'augmenter soit leur diamètre, soit leur nombre. Or l'augmentation de diamètre des trous 22 est limitée par le débattement de la traversée coulissante 20 par rapport aux vrilles radiales 40. De plus, l'augmentation du nombre de trous 22 a une influence sur le blocage aérodynamique, ce qui n'est pas toujours souhaité.

Une autre façon d'augmenter le débit est d'augmenter la pression de l'air arrivant aux trous de purge 22. Or, pour alimenter les trous 22, l'air doit contourner la paroi convergente 21 de la traversée coulissante, ce qui est à l'origine de pertes de charge et de recirculations, et donc d'une perte de pression et de mauvaises conditions d'alimentation.

Pour répondre à ce problème, il est connu, comme illustré dans le document FR 2753779, de réaliser les trous de purge 22 dans la paroi cylindrique 24 de la traversée coulissante de façon à ce que leur axe soit parallèle à l'axe X du dispositif d'injection. Les inconvénients de cette solution sont que la traversée coulissante est alors plus massive et que les trous sont plus longs pour un même diamètre. Ceci est à l'origine d'une perte d'énergie, subie par l'air lors de la traversée des trous de purge, et de recirculations, néfastes pour le débit d'air.

L'invention permet de résoudre ces problèmes en proposant un dispositif d'injection comportant une traversée coulissante aménagée de façon à augmenter le débit d'air passant dans les trous de purge, sans être limités par le débattement de la traversée coulissante, ni par l'impact sur le blocage aérodynamique.

L'invention permet de plus de rendre le débit d'air passant dans les trous de purge indépendant de la géométrie de la traversée coulissante, par exemple de la longueur de la paroi amont convergente.

Plus particulièrement, l'invention concerne un dispositif d'injection d'un mélange d'air et de carburant pour chambre de combustion de turbomachine, le dispositif d'injection ayant une symétrie de révolution autour d'un axe X et comportant, disposés d'amont en aval dans le sens d'écoulement des gaz, une traversée coulissante d'axe de révolution Y, liée à des vrilles radiales par une coupelle, un bol aérodynamique espacé axialement des vrilles radiales, la traversée coulissante comprenant une paroi amont conique convergente, se prolongeant en une paroi cylindrique d'axe Y, et un flasque aval s'étendant radialement à l'extrémité aval de la paroi cylindrique, le flasque aval étant muni de trous d'alimentation en air sous pression encore appelés trous de purge, dispositif remarquable en ce que la paroi amont convergente de la traversée coulissante est munie d'au moins une rangée d'orifices supplémentaires d'alimentation en air sous pression (25) espacés circonférentiellement.

Avantageusement, les orifices supplémentaires d'alimentation ont une section totale de passage supérieure ou égale à la section totale de passage des trous de purge.

Selon quelques exemples de réalisation, les orifices supplémentaires d'alimentation sont de forme cylindrique avec une directrice de forme circulaire, oblongue ou en forme de quadrilatère.

L'axe des orifices supplémentaires d'alimentation peut être parallèle à l'axe de la traversée coulissante ou encore orthogonal à la paroi de la paroi amont convergente.

Selon un autre mode de réalisation de l'invention, les orifices supplémentaires d'alimentation sont disposés à l'extrémité amont de la paroi amont convergente, sont débouchants et forment des festons.

Selon une variante de l'invention, les trous de purge ont un diamètre d'entrée et un diamètre de sortie différents, le diamètre d'entrée étant supérieur ou diamètre de sortie.

Avantageusement, l'invention concerne aussi une combinaison des différentes variantes de réalisation, notamment, la traversée coulissante peut être munie simultanément d'orifices supplémentaires d'alimentation, ou de festons, et les trous de purge avoir un diamètre d'entrée (26) et un diamètre de sortie (27) différents, le diamètre d'entrée (26) étant supérieur au diamètre de sortie (27).

L'invention concerne aussi une chambre de combustion et une turbomachine munie d'un dispositif d'injection selon l'invention.

L'invention sera mieux comprise et d'autres avantages de celle-ci apparaîtront plus clairement à la lumière de la description de modes préférés de réalisation, donnée à titre d'exemple non limitatif et faite en référence aux dessins annexés, dans lesquels :

- la figure 1 est une vue schématique en coupe d'une chambre de combustion selon l'art antérieur ;
- la figure 2 est une vue schématique en coupe d'un dispositif d'injection selon l'art antérieur ;
- la figure 3 est une vue schématique en coupe d'une turbomachine et plus précisément d'un turboréacteur d'avion ;
- la figure 4 est une vue schématique en coupe d'une traversée coulissante selon l'invention ;
- la figure 5 est une vue schématique en coupe d'un second mode de réalisation d'une traversée coulissante selon l'invention ;
- la figure 6 est une vue schématique en coupe d'un troisième mode de réalisation d'une traversée coulissante selon l'invention ;
- la figure 7 est une vue schématique en coupe d'un quatrième mode de réalisation d'une traversée coulissante selon l'invention ;

- la figure 8 est une vue schématique en coupe d'un cinquième mode de réalisation d'une traversée coulissante selon l'invention ;
- la figure 9 est une vue schématique en coupe d'un sixième mode de réalisation d'une traversée coulissante selon l'invention ;
- la figure 10 est une vue schématique en coupe d'une première variante de réalisation d'une traversée coulissante selon l'invention;
- la figure 11 est une vue schématique en coupe d'une seconde variante de réalisation d'une traversée coulissante selon l'invention ;
- la figure 12 est une vue schématique en coupe d'une combinaison entre deux variantes de réalisation d'une traversée coulissante selon l'invention.

Les mêmes références seront conservées, tout au long de la description, pour désigner des pièces ou détails similaires d'une figure à l'autre.

La figure 1 et la figure 2, déjà décrites, montrent, en coupe, une chambre de combustion et un dispositif d'injection selon l'art antérieur.

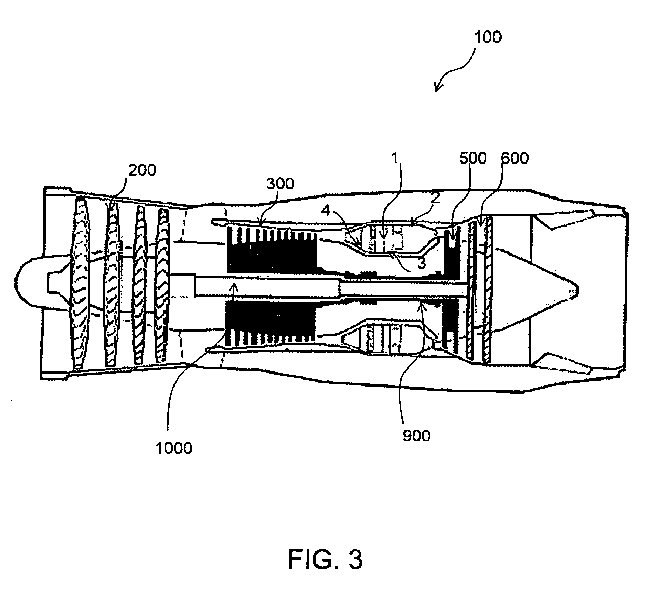

La figure 3 montre en coupe une vue d'ensemble d'une turbomachine 100, par exemple un turboréacteur d'avion, comprenant un compresseur basse pression 200, un compresseur haute pression 300, une chambre de combustion 1, une turbine basse pression 500 et une turbine haute pression 600. Les gaz de combustion s'écoulent vers l'aval dans la chambre de combustion 1 et alimentent ensuite les turbines 500 et 600 qui entraînent respectivement les compresseurs 200 et 300 disposés en amont du fond de chambre 4, par l'intermédiaire respectivement de deux arbres 900 et 1000. Le compresseur haute pression 300 alimente en air les dispositifs d'injection, ainsi que deux espaces annulaires disposés radialement respectivement à l'intérieur et à l'extérieur de la chambre de combustion 1. L'air introduit dans la chambre de combustion 1 participe à la vaporisation du carburant et à sa combustion. L'air circulant à l'extérieur des parois de la chambre de combustion 2 participe au refroidissement de ses parois et pénètre dans la chambre par des trous de dilution (non représentés) afin de refroidir les gaz de combustion transmis à la turbine.

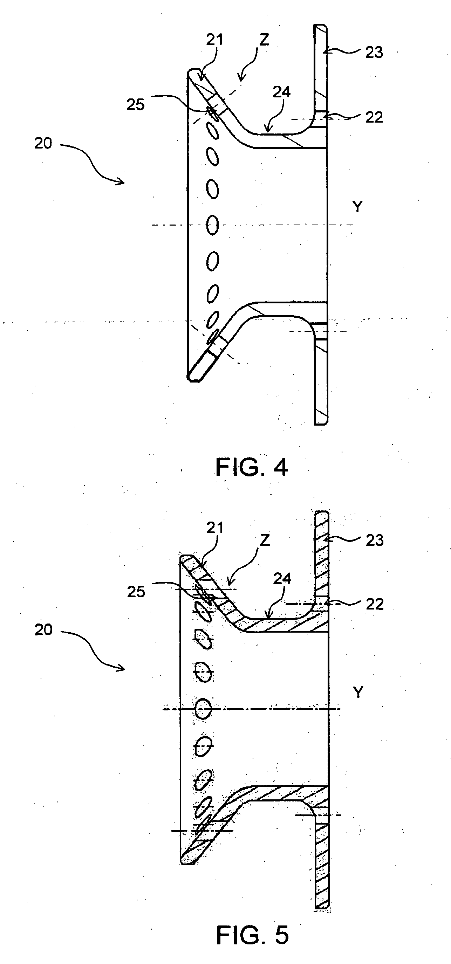

La figure 4 montre en coupe un exemple de réalisation d'une traversée coulissante 20 d'un dispositif d'injection 10 selon l'invention. La traversée coulissante 20 est composée d'une paroi amont conique convergente 21, se prolongeant vers l'aval en une paroi cylindrique 24 dont l'axe Y est parallèle à l'axe de symétrie du dispositif d'injection. La paroi cylindrique 24 se termine par un flasque 23, s'étendant radialement vers l'extérieur. Le flasque 23 est muni de trous de purge 22, disposés préférentiellement dans sa partie la plus proche de la paroi cylindrique 24, de façon à ne pas être obturés, même partiellement, par les vrilles radiales 40 en cas de déplacement relatif entre la traversée coulissante 20 et le dispositif d'injection 10. Sur la paroi amont convergente 21 de la traversée coulissante 20, des orifices supplémentaires 25 d'alimentation des trous de purge en air sous pression sont réalisés. Dans l'exemple décrit ici, la paroi amont convergente 21 est munie d'une seule rangée d'orifices supplémentaires d'alimentation 25 espacés circonférentiellement, mais plusieurs rangées d'orifices pourraient être réalisées. L'axe Z de ces orifices supplémentaires 25 peut être orthogonal à la paroi de la paroi amont convergente 21, comme illustré à la figure 4. Il peut aussi être parallèle à l'axe Y, comme illustré à la figure 5, ou encore former avec la paroi amont convergente 21 un angle quelconque.

Ainsi, les trous de purge 22 ne sont plus alimenté par de l'air sous pression devant contourner la paroi amont convergente 21 de la traversée coulissante 20, mais directement par de l'air issu des orifices supplémentaires d'alimentation 25. Ceci permet de s'affranchir des pertes de charge dues au contournement de la paroi amont 21. Pour que ce type d'alimentation des trous de purge 22 soit efficace, la section totale de passage de l'air au niveau des orifices supplémentaires d'alimentation 25 doit être supérieure ou égale à la section totale de passage de l'air dans les trous de purge. La section totale de passage des orifices supplémentaires d'alimentation 25 correspond à la valeur de la section de passage d'un orifice multipliée par le nombre d'orifices. Il en va de même pour la section de passage des trous de purge 22. Dans ces conditions, les trous de purge 22 sont alimentés par l'air ayant une pression plus élevée, ce qui permet, pour une même géométrie et un même nombre de trous de purge que dans l'art antérieur, de faire passer par ces trous un débit d'air plus important.

Parallèlement, si le débit recherché reste identique à l'art antérieur, l'emploi d'orifices supplémentaires d'alimentation 25 permet d'utiliser des trous de purge 22 ayant un diamètre plus petit que l'art antérieur, ce qui permet de diminuer d'autant le diamètre intérieur du flasque 23, donc de diminuer l'encombrement des vrilles radiales 40 et par suite d'obtenir un dispositif d'injection plus compact.

Plus la section des orifices supplémentaires d'alimentation sera élevée, plus la tolérance au niveau des irrégularités de forme et de la rugosité des trous de purge 22 sera grande, ce qui permet de diminuer les coûts de fabrication. Bien que les orifices supplémentaires d'alimentation 25 soient réalisés sur la paroi amont convergente 21 de la traversée coulissante, dans la mesure où la section totale de passage de l'air au niveau de ces orifices est conservée, l'alimentation des trous de purge 22 ne dépend plus de la géométrie de la traversée coulissante, notamment de la paroi amont convergente.

Le nombre d'orifices supplémentaires d'alimentation 25 peut être égal ou différent du nombre de trous de purge 22, l'important étant la section totale de passage.

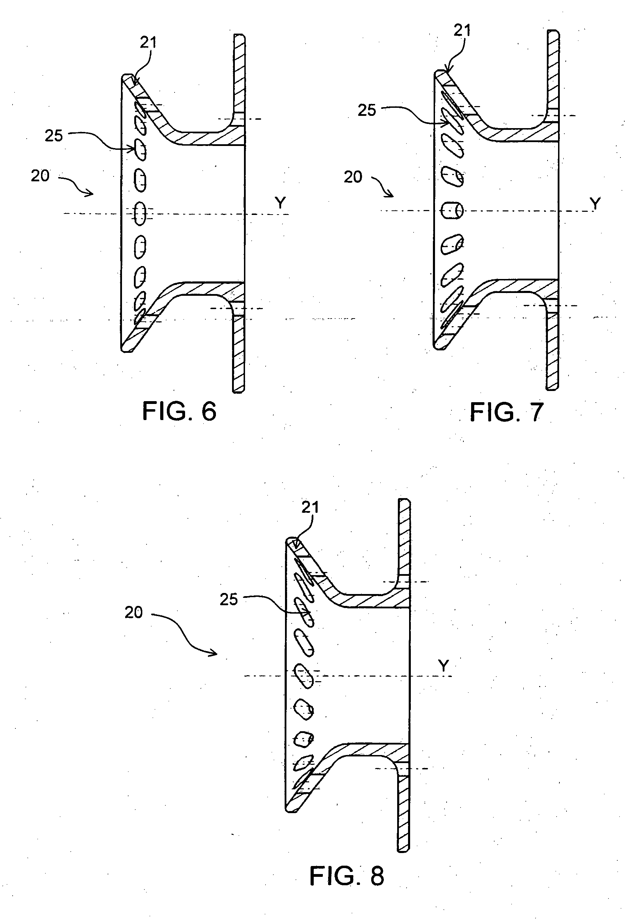

Par ailleurs, les orifices supplémentaires d'alimentation 25 peuvent être de forme circulaire, comme illustré aux figures 4 et 5, ou encore oblongue, parallélépipédique ou trapézoïdale, comme illustré aux figures 6 à 9. Dans le cas d'une forme oblongue, la grande longueur des orifices 25 peut être disposée selon la circonférence de la paroi amont convergente 21, comme illustré à la figure 6. Elle peut aussi être disposée parallèlement à l'axe Y de la traversée coulissante 20, comme illustré à la figure 7, ou selon un angle quelconque compris entre ces deux positions, comme illustré à la figure 8.

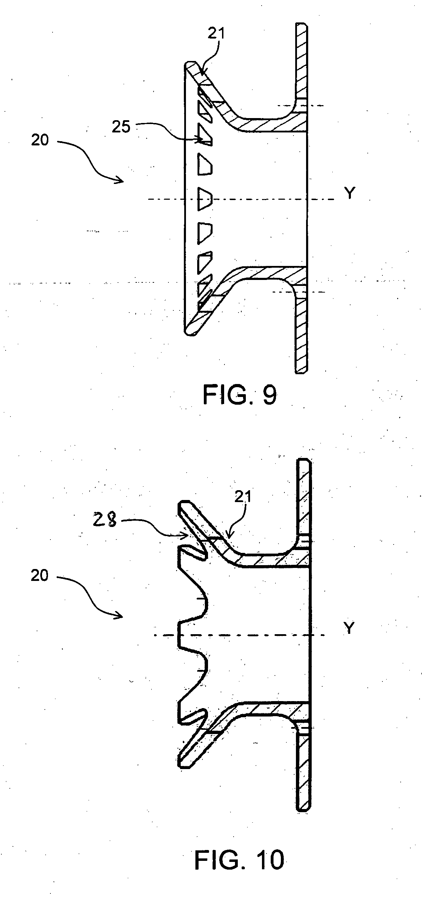

Selon un autre mode de réalisation de l'invention, illustré à la figure 10, les orifices supplémentaires d'alimentation 25 peuvent être disposés à l'extrémité amont de la paroi convergente 21, réalisés de façon à ce qu'il soient débouchants et ainsi former des festons 28. Les festons 28 présentent l'avantage d'être plus simples à fabriquer car, dans le cas où la traversée coulissante 20 est obtenue par un procédé de fonderie, les festons 28 peuvent être obtenus directement de fonderie, sans nécessiter d'usinage particulier.

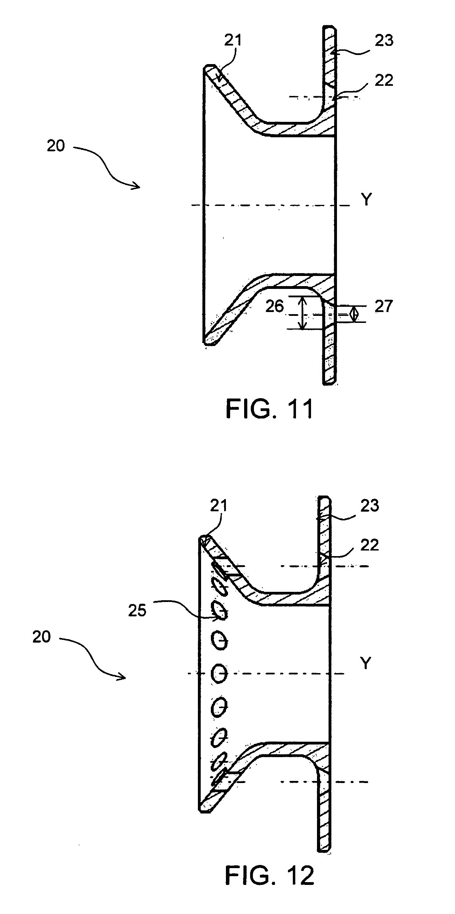

Selon une variante de l'invention, l'augmentation de pression nécessaire à l'augmentation de la quantité d'air traversant les trous de purge 22, peut être obtenue en aménageant la géométrie des trous de purge 22. La figure 11 montre une vue en coupe d'une traversée coulissante 20, sur laquelle les trous de purge 22 sont coniques, leur diamètre d'entrée 26 étant plus grand que leur diamètre de sortie 27. Ainsi, le débit restant constant tout au long des trous de purge 22, l'air est accéléré, et la quantité d'air passant par les trous de purge 22 sur un temps donné est plus élevée.

Il est bien entendu possible de panacher les variantes de l'invention, en combinant les effets liés à l'ajout d'orifices supplémentaires d'alimentation 25, ou de festons 28, et les effets liés l'utilisation de trous de purge 22 coniques. Un exemple d'une telle combinaison est illustré à la figure 12.

A titre d'exemple, des simulations numériques en trois dimensions, ont permis d'établir que, pour une traversée coulissante munie de 14 trous de purge de 1,4 mm de diamètre, l'aménagement de 20 orifices supplémentaires d'alimentation circulaires, tels que décrits à la figure 4, de 1,8 mm de diamètre, permettait d'obtenir une augmentation de 15% du débit d'air passant par les trous de purge 22.

**Revendications**

1.  Dispositif d'injection d'un mélange d'air et de carburant pour chambre de combustion de turbomachine, le dispositif d'injection ayant une symétrie de révolution autour d'un axe (X) et comportant, disposés d'amont en aval dans le sens d'écoulement des gaz, une traversée coulissante (20) d'axe de révolution Y, liée à des vrilles radiales (40) par une coupelle (30), un bol aérodynamique (60) espacé axialement des vrilles radiales (40), la traversée coulissante (20) comprenant une paroi amont conique convergente (21), se prolongeant en une paroi cylindrique d'axe Y, et un flasque aval (23) s'étendant radialement à l'extrémité aval de la paroi cylindrique, le flasque aval (23) étant muni de trous d'alimentation en air sous pression encore appelés trous de purge (22), **caractérisé en ce que** la paroi amont convergente (21) de la traversée coulissante (20) est munie d'au moins une rangée d'orifices supplémentaires d'alimentation en air sous pression (25) espacés circonférentiellement.

2.  Dispositif d'injection selon la revendication 1,
    **caractérisé en ce que** les orifices supplémentaires d'alimentation (25) ont une section totale de passage supérieure ou égale à la section totale de passage des trous de purge (22).

3.  Dispositif d'injection selon l'une des revendications 1 ou 2,
    **caractérisé en ce que** les orifices supplémentaires d'alimentation (25) sont de forme cylindrique avec une directrice de forme circulaire.

4.  Dispositif d'injection selon l'une des revendications 1 ou 2,
    **caractérisé en ce que** les orifices supplémentaires d'alimentation (25) sont de forme cylindrique avec une directrice de forme oblongue.

5.  Dispositif d'injection selon l'une des revendications 1 ou 2,
    **caractérisé en ce que** les orifices supplémentaires d'alimentation (25) sont de forme cylindrique avec une directrice en forme de quadrilatère.

6.  Dispositif d'injection selon l'une quelconque des revendications 1 à 5,
    **caractérisé en ce que** les orifices supplémentaires d'alimentation (25) ont leur axe (Z) parallèle à l'axe de la traversée coulissante (Y).

**7.** Dispositif d'injection selon l'une quelconque des revendications 1 à 5,
**caractérisé en ce que** les orifices supplémentaires, d'alimentation (25) ont leur axe (Z) orthogonal à la paroi amont conique convergente (21).

**8.** Dispositif d'injection selon l'une quelconque des revendications 1 ou 2,
**caractérisé en ce que** les orifices supplémentaires d'alimentation (25) sont disposés à l'extrémité amont de la paroi amont convergente (21), qu'ils sont débouchants et forment des festons.

**9.** Dispositif d'injection selon l'une quelconque des revendications 1 à 8,
**caractérisé en ce que** les trous de purge (22) ont un diamètre d'entrée (26) et un diamètre de sortie (27) différents, le diamètre d'entrée (26) étant supérieur ou diamètre de sortie (27).

**10.** Chambre de combustion comprenant une paroi interne, une paroi externe, un fond de chambre (8) **caractérisée en ce qu'**elle est munie d'au moins un dispositif d'injection selon l'une quelconque des revendications précédentes.

**11.** Turbomachine munie d'une chambre de combustion selon la revendication 10.


**Patentansprüche**

**1.** Einspritzvorrichtung eines Luft- und Kraftstoffgemischs für Brennkammer eines Turbomotors, wobei die Einspritzvorrichtung eine Rotationssymmetrie um eine Achse (X) hat und, von stromaufwärts nach stromabwärts in die Strömungsrichtung der Gase, eine Gleitdurchführung (20) mit Rotationsachse Y aufweist, die mit radialen Wirbeln (40) durch eine Schale (30) verbunden ist, einen aerodynamischen Napf (60), der axial von den radialen Wirbeln (40) beabstandet ist, wobei die Gleitdurchführung (20) eine stromaufwärtige kegelige konvergierende Wand (21) aufweist, die sich in einer zylindrischen Wand mit Achse Y verlängert, und einen stromabwärtigen Flansch (23), der sich radial an dem stromabwärtigen Ende der zylindrischen Wand erstreckt, wobei der stromabwärtige Flansch (23) mit Löchern zum Zuführen von Luft unter Druck, auch Entleerungslöcher (22) genannt, versehen ist, **dadurch gekennzeichnet, dass** die stromaufwärtige konvergierende Wand (21) der Gleitdurchführung (20) mit mindestens einer Reihe zusätzlicher Öffnungen zum Zuführen von Luft unter Druck (25) versehen ist, die umfänglich beabstandet sind.

**2.** Einspritzvorrichtung nach Anspruch 1, **dadurch gekennzeichnet, dass** die zusätzlichen Zuführöffnungen (25) einen Gesamtdurchgangsquerschnitt haben, der größer oder gleich ist wie der Gesamtdurchgangsquerschnitt der Entleerungslöcher (22).

**3.** Einspritzvorrichtung nach einem der Ansprüche 1 oder 2, **dadurch gekennzeichnet, dass** die zusätzlichen Zuführöffnungen (25) zylindrische Form mit einer Leitlinie in Kreisform haben.

**4.** Einspritzvorrichtung nach einem der Ansprüche 1 oder 2, **dadurch gekennzeichnet, dass** die zusätzlichen Zuführöffnungen (25) zylindrische Form mit einer länglichen Leitlinie haben.

**5.** Einspritzvorrichtung nach einem der Ansprüche 1 oder 2, **dadurch gekennzeichnet, dass** die zusätzlichen Zuführöffnungen (25) zylindrische Form mit einer Leitlinie in Viereckform haben.

**6.** Einspritzvorrichtung nach einem der Ansprüche 1 bis 5, **dadurch gekennzeichnet, dass** die zusätzlichen Zuführöffnungen (25) ihre Achse (Z) parallel zu der Gleitdurchführung (Y) haben.

**7.** Einspritzvorrichtung nach einem der Ansprüche 1 bis 5, **dadurch gekennzeichnet, dass** die zusätzlichen Zuführöffnungen (25) ihre Achse (Z) orthogonal zu der stromaufwärtigen kegeligen konvergierenden Wand (21) haben.

**8.** Einspritzvorrichtung nach einem der Ansprüche 1 oder 2, **dadurch gekennzeichnet, dass** die zusätzlichen Zuführöffnungen (25) an dem stromaufwärtigen Ende der stromaufwärtigen konvergierenden Wand (21) angeordnet sind, dass sie durchgehend sind und Festonbögen bilden.

**9.** Einspritzvorrichtung nach einem der Ansprüche 1 bis 8, **dadurch gekennzeichnet, dass** die Entleerungslöcher (22) einen unterschiedlichen Eingangsdurchmesser (26) und Ausgangsdurchmesser (27) haben, wobei der Eingangsdurchmesser (26) größer ist als der Ausgangsdurchmesser (27).

**10.** Brennkammer, die eine Innenwand, eine Außenwand, einen Kammerboden (8) aufweist, **dadurch gekennzeichnet, dass** sie mit mindestens einer Einspritzvorrichtung nach einem der vorhergehenden Ansprüche versehen ist.

**11.** Turbomotor, der mit einer Brennkammer nach Anspruch 10 versehen ist.

**Claims**

**1.** A device for injecting a mixture of air and fuel into a combustion chamber of a turbomachine, the injection device having symmetry of revolution about an axis and comprising, arranged from upstream to downstream in the direction in which the gases flow, a sliding bushing (20) of axis of revolution Y connected to radial swirl inducers (40) by a dish (30), an aerodynamic bowl (60) spaced axially from the radial swirl inducers (40), the sliding bushing (20) comprising a convergent conical upstream wall (21) continuing into a cylindrical wall of axis Y and a downstream flange (23) extending radially at the downstream end of the cylindrical wall, the downstream flange (23) being equipped with pressurized-air supply holes also known as purge holes (22), **characterized in that** the convergent upstream wall (21) of the sliding bushing (20) is equipped with at least one row of circumferentially-spaced additional pressurized-air supply orifices (25).

**2.** The injection device as claimed in claim 1,
wherein the additional supply orifices (25) have a total passage cross section greater than or equal to the total passage cross section of the purge holes (22).

**3.** The injection device as claimed in one of claims 1 and 2,
wherein the additional supply orifices (25) are of cylindrical shape with a directrix that is circular in shape.

**4.** The injection device as claimed in one of claims 1 and 2,
wherein the additional supply (25) orifices are of cylindrical shape with a directrix that is oblong in shape.

**5.** The injection device as claimed in one of claims 1 and 2,
wherein the additional supply orifices (25) are of cylindrical shape with a directrix that is shaped as a quadrilateral.

**6.** The injection device as claimed in any one of claims 1 to 5,
wherein the additional supply orifices (25) have their axis (Z) parallel to the axis (Y) of the sliding bushing.

**7.** The injection device as claimed in any one of claims 1 to 5,
wherein the additional supply orifices (25) have their axis (Z) orthogonal to the convergent conical upstream wall (21).

**8.** The injection device as claimed in any one of claims 1 and 2,
wherein the additional supply orifices (25) are positioned at the upstream end of the convergent upstream wall (21), have an open side and form scallops.

**9.** The injection device as claimed in any one of claims 1 to 8,
wherein the purge holes (22) have different inlet (26) and outlet (27) diameters, the inlet diameter (26) being greater than the outlet diameter (27).

**10.** A combustion chamber comprising an internal wall, an external wall, a chamber endwall (8) and which is equipped with at least one injection device as claimed in any one of the preceding claims.

**11.** A turbomachine equipped with a combustion chamber as claimed in claim 10.

FIG. 1

FIG. 2

FIG. 3

FIG. 4

FIG. 5

FIG. 6

FIG. 7

FIG. 8

FIG. 9

FIG. 10

FIG. 11

FIG. 12

14

## RÉFÉRENCES CITÉES DANS LA DESCRIPTION

**Documents brevets cités dans la description**

- EP 1152191 A

- FR 2753779